# EUROPÄISCHE PATENTSCHRIFT

(11) **EP 1 386 818 B1**
(45) Veröffentlichungstag und Bekanntmachung des Hinweises auf die Patenterteilung: **27.04.2005**
(21) Anmeldenummer: 03015262.3
(22) Anmeldetag: 07.07.2003
(51) Int. Cl.: B61D 23/02, B60R 3/02

(54) **Schiebetritt, insbesondere für Schienenfahrzeuge**
Extendable footstep, in particular for rail vehicles
Marchepied déployable, en particulier pour véhicules ferroviaires

(30) Priorität: 31.07.2002 DE 10235871
(43) Veröffentlichungstag der Anmeldung: 04.02.2004
(73) Patentinhaber: Pintsch Bamag Antriebs- und Verkehrstechnik GmbH, 46537 Dinslaken (DE)
(72) Erfinder: Schulte, Andreas, Dipl.-Ing., 46399 Bocholt (DE); Stahl, Andreas, 46562 Voerde (DE)
(74) Vertreter: Patentanwälte Ruff, Wilhelm, Beier, Dauster & Partner

(56) Entgegenhaltungen:
- EP-A- 0 118 923
- EP-A- 1 034 765
- FR-A- 2 670 445
- US-A- 5 775 232
- US-B1- 6 167 816
- US-B1- 6 325 397

## Beschreibung

Die Erfindung betrifft einen Schiebetritt, insbesondere für Schienenfahrzeuge, mit einer Trittkassette und einem in der Trittkassette wenigstens abschnittsweise aufnehmbaren und verschiebbar gelagerten Ausschub mit einer Trittfläche.

Aus der französischen Offenlegungsschrift FR 27 03 317 A1 ist ein Schiebetritt für Schienenfahrzeuge bekannt, bei dem in einem flachen, kassettenartigen Gehäuse ein Ausschub und ein Antriebsmotor für den Ausschub angeordnet sind. Der Ausschub wird durch Gewindestangen bewegt, die rechts und links des Ausschubs in dem kassettenartigen Gehäuse verlaufen und mittels einer in Ausschubrichtung hinter dem Ausschub gelegenen Antriebswelle angetrieben werden. Diese hinter dem Ausschub liegende Antriebswelle wird ihrerseits über den Antriebsmotor angetrieben. Als Antriebsmotor ist ein pneumatischer Motor vorgesehen. Mittels des pneumatischen Motors werden die rechts und links des Ausschubs liegenden Gewindestangen angetrieben.

Aus der deutschen Patentschrift DE 701 019 ist eine ausfahrbare Trittstufe für ein Schienenfahrzeug bekannt, die mittels eines Zahnstangenantriebs ein- und ausgefahren werden kann. In der ausgefahrenen Stellung wird die Trittstufe mittels eines federbelasteten, drehbar gelagerten Doppelhebels arretiert. Der Doppelhebel wird beim Schließen der Türe durch einen an dieser angeordneten Nocken bewegt, wodurch die Trittstufe freigegeben wird.

Aus der deutschen Offenlegungsschrift DE 37 08 498 A1 ist eine ausfahrbare Eisenbahnwagen-Trittstufe bekannt, bei der ein berührungsloser Reflexsensor vorgesehen ist, um verschieden hohe und verschieden weit entfernte Bahnsteige ansteuern zu können. Als Sensor ist ein in der Stirnkante der ausfahrbaren Trittstufe angeordneter und gemeinsam mit dieser verfahrbarer pneumatischer Staudrucksensor vorgesehen, wobei auch die Verwendung von Ultraschallsensoren vorgeschlagen wird.

Mit der Erfindung soll ein Schiebetritt, insbesondere für Schienenfahrzeuge, geschaffen werden, der auch bei rauen Umgebungsbedingungen eine erhöhte Zuverlässigkeit aufweist.

Erfindungsgemäß ist hierzu ein Schiebetritt, insbesondere für Schienenfahrzeuge, mit einer Trittkassette und einem in der Trittkassette wenigstens abschnittsweise aufnehmbaren und verschiebbar gelagerten Ausschub mit einer Trittfläche vorgesehen, bei dem in der Trittkassette ein allseitig abgeschlossener, gegen eindringende Feuchtigkeit und Verschmutzung abgedichteter Trockenraum vorgesehen ist, in dem ein Antriebsmotor und eine Steuereinheit angeordnet sind.

Durch Vorsehen eines Trockenraums für den Antriebsmotor und die Steuereinheit können der Motor, gegebenenfalls erforderliche Steuerelektronik sowie elektrische Leitungen zwischen der Steuereinheit und dem Antriebsmotor vollständig gekapselt angeordnet werden. Die Durchführung einer Antriebswelle oder Antriebsstange wird abgedichtet ausgeführt. Indem der Motor und die Steuereinheit gekapselt angeordnet sind, wird ein sehr ausfallsicherer Schiebetritt geschaffen, der speziell für die sehr rauen Umgebungsbedingungen für den Einsatz in Schienenfahrzeugen geeignet ist. Speziell können durch den Ausschub und speziell dessen Trittfläche zwangsläufig in die Trittkassette eingebrachte Feuchtigkeit und Schmutz nicht den Antriebsmotor und die Steuereinheit verschmutzen. Versorgungs- und Signalleitungen für den Antriebsmotor und die Steuereinheit müssen lediglich in den Trockenraum geführt werden, wobei die Einführung dieser Leitungen zweckmäßigerweise ebenfalls abgedichtet ist.

In Weiterbildung der Erfindung weist der Trockenraum wenigstens eine mittels einer wasserundurchlässigen aber wasserdampfdurchlässigen Membran verschlossene Entlüftungsöffnung auf.

Durch diese Maßnahmen ist beispielsweise das Austrocknen von Kondenswasser im Trockenraum möglich, wodurch eine erhöhte Sicherheit gegen Feuchtigkeitsschäden erreicht wird. Auch trotz Abdichtung eingedrungene Feuchtigkeit kann über die Entlüftungsöffnung wieder entweichen. Speziell bei den großen Temperaturschwankungen, denen Schienenfahrzeuge ausgesetzt sind, trägt das Vorsehen einer Entlüftungsöffnung zu einem sehr ausfallsicheren Schiebetritt bei.

In Weiterbildung der Erfindung ist der Trockenraum Bestandteil der Trittkassette.

Auf diese Weise können der Antriebsmotor und die Steuereinheit fahrzeugfest angeordnet werden, so dass der Anschluss von Versorgungs- und Signalleitungen erleichtert ist.

In Weiterbildung der Erfindung weist der Ausschub einen Rahmen mit zwei Seitenholmen auf, zwischen denen der Trockenraum wenigstens in der vollständig eingefahrenen Stellung angeordnet ist.

Der Rahmen des Ausschubs wird in der Trittkassette verschoben und da der Trockenraum mit dem Antriebsmotor und der Steuereinheit zwischen den Seitenholmen des Rahmens angeordnet ist, kann ein sehr kompakter, ineinander verschachtelter Aufbau des Ausschubs, des Trockenraums und der Trittkassette erzielt werden. Eine Verschiebung des Ausschubs kann beispielsweise mittels einer Schubkette und/oder einer Gewindespindel erfolgen.

In Weiterbildung der Erfindung ist der Ausschub mittels der zwei Seitenholme in der Trittkassette geführt.

Da der Trockenraum zwischen den Seitenholmen angeordnet ist, können diese über die gesamte Länge der Trittkassette geführt werden, wodurch sich einerseits eine stabile und präzise Führung und zum anderen ein kompakter Aufbau bei großem Ausschubweg ergibt.

In Weiterbildung der Erfindung ist vorgesehen, dass der Ausschub mit einer Antriebsstange gekoppelt ist, die in der vollständig eingefahrenen Endstellung des Ausschubs wenigstens abschnittsweise zwischen den Seitenholmen angeordnet ist.

Da die Antriebsstange nicht seitlich neben dem Ausschub, sondern wenigstens abschnittsweise zwischen dessen Seitenholmen angeordnet ist, wird ein sehr kompakter Aufbau ermöglicht. Als Antriebsstange kann beispielsweise eine Zahnstange, eine Gewindestange oder auch eine Schubstange verwendet werden.

In Weiterbildung der Erfindung ist eine Antriebsstange vorgesehen, die mit dem Ausschub oder der Trittkassette mittels eines elastischen Elements gekoppelt ist, und Mittel sind vorgesehen, um eine Auslenkung des elastischen Elements über einen vordefinierten Schwellwert hinaus zu detektieren.

Auf diese Weise wird eine einfache Möglichkeit geschaffen, Überlast beim Bewegen des Ausschubs festzustellen, sei es, dass der Ausschub beim Ausfahren gegen ein Hindernis läuft oder beim Einfahren einen erhöhten Reibungswiderstand zu überwinden hat. Als elastisches Element kann beispielsweise ein Federpaket zwischen der Antriebsstange und dem Ausschub verwendet werden, dessen Deformation mittels eines Schalters detektiert wird. Wird das Federpaket über einen vordefinierten Schwellwert hinaus ausgelenkt, kann beispielsweise eine Drehrichtung des Antriebsmotors für eine vorbestimmte Wegstrecke umgekehrt werden.

In Weiterbildung der Erfindung ist der Ausschub im Bereich der Trittfläche mit einer Schaltmatte belegt.

Mittels einer Schaltmatte kann die gesamte Trittfläche zuverlässig auf Trittbelastung überwacht werden. Die Funktion einer Schaltmatte kann beispielsweise auch durch ein elastisches Element übernommen werden, bei dessen Auslenkung ein Schalter betätigt wird.

In Weiterbildung der Erfindung ist vorgesehen, dass die Trittkassette eine sich im wesentlichen über ihre gesamte Oberseite erstreckende klappbare Deckplatte aufweist.

Durch diese Maßnahmen ist der Schiebetritt, beispielsweise für Inspektions- oder Reparaturarbeiten, auf einfache Weise sehr gut zugänglich.

Die klappbare Deckplatte klappt zweckmäßigerweise zum Fahrzeuginneren hin auf.

In Weiterbildung der Erfindung bildet die Deckplatte einen Fahrzeugfußboden im Türbereich.

Auf diese Weise ist der Schiebetritt für Inspektions- oder Reparaturarbeiten vom Innenraum des Fahrzeugs her zugänglich. Die Deckplatte kann beispielsweise mit einem für das Fahrzeug vorgesehenen Bodenbelag beklebt werden und wird beispielsweise mittels Vorreibern in ihrer geschlossenen Stellung gehalten.

In Weiterbildung der Erfindung bildet die Trittkassette mit dem darin verschiebbar aufgenommenen Ausschub sowie der Antriebs- und Steuereinheit ein austauschbares Modul, das im Türbereich eines Schienenfahrzeugs in dessen Fußboden einsetzbar ist. Auf diese Weise ist der Schiebetritt für Reparaturzwecke in einfacher Weise austauschbar, so dass die Dauer von Werkstattaufenthalten reduziert werden kann. Darüber hinaus wird die Nachrüstung bestehender Fahrzeuge erleichtert.

In Weiterbildung der Erfindung weist die Trittkassette eine Grundplatte und wenigstens zwei gegenüberliegende Seitenwandungen auf, wobei der Ausschub verschiebbar an den Seitenwandungen gelagert ist.

Durch Lagerung des Ausschubs an den Seitenwandungen ist ein sehr flacher Aufbau des gesamten Schiebetritts möglich, so dass dessen Unterbringung im Fußbodenbereich eines Schienenfahrzeugs erleichtert ist. Als Seitenwandungen werden beispielsweise Strangpressprofile verwendet, die geeignete Lager zur Führung des Ausschubs aufnehmen. Indem der Ausschub unmittelbar in den Seitenwandungen der Trittkassette gelagert ist, kann die Trittkassette mit Querabmessungen ausgeführt werden, die lediglich um die Dicke der Seitenwandungen sowie des für die Führungen des Ausschubs benötigten Raums über den Querabmessungen des Ausschubs liegen.

In Weiterbildung der Erfindung ist die Trittfläche beheizbar.

Durch Vorsehen einer Heizung für die Trittfläche kann sichergestellt werden, dass diese auch bei niedrigen Außentemperaturen vereisungsfrei bleibt. Die Ausschubfunktion ist dabei unabhängig von der Heizfunktion, so dass der Ausfall der Trittheizung nicht zu einem Ausfall des gesamten Schiebetritts führt.

In Weiterbildung der Erfindung weist die Antriebseinheit einen elektrischen Gleichstrommotor mit nachgeschaltetem Planetengetriebe auf und die Antriebseinheit treibt eine Zahnstangenschubeinheit an.

Eine solche Antriebseinheit ermöglicht eine sehr feinfühlige Steuerung und insbesondere Kollisionserkennung des Ausschubs durch Überwachen des Motorstroms. Eine Getriebeabtriebswelle erstreckt sich abgedichtet durch die Wandung des Trockenraums. Vorzugsweise sind die Antriebseinheit und der Ausschub mittels eines elastischen Elements gekoppelt.

In Weiterbildung der Erfindung ist die Antriebseinheit mit einer elektrisch aktivierbaren Bremse versehen.

Eine solche Bremse ist vorteilhafterweise auf der Motorwelle aufgeflanscht, in dem Trockenraum angeordnet und arbeitet nach dem Arbeitsstromprinzip. Bei Bestromung der Bremse bremst bzw. blockiert diese die Motorwelle, wodurch der Ausschub in jeder erreichten Zwischenlage festlegbar ist.

In Weiterbildung der Erfindung sind im Bereich der Vorderkante des Ausschubs Sensoren vorgesehen, die ein innerhalb eines vordefinierten Abstands unterhalb und/oder oberhalb des Ausschubs liegendes Hindernis beim Über- oder Unterfahren detektieren.

Auf diese Weise ist kein Über- oder Unterfahren von Hindernissen oder Bahnsteigen möglich, das zur Beschädigungen des Schiebetritts führen könnte. Als Sensoren werden beispielsweise federbelastete Schalter oder berührungslose Sensoren, beispielsweise Ultraschallsensoren oder Reflexlichttaster, eingesetzt.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. Die Zeichnungen zeigen:
- Fig. 1: eine perspektivische Ansicht eines erfindungsgemäßen Schiebetritts für ein Schienenfahrzeug mit aufgeklappter Deckplatte,
- Fig. 2: eine weitere perspektivische Ansicht des Schiebetritts der Fig. 1 bei abgenommener Deckplatte,
- Fig. 3: eine perspektivische Ansicht der Trittkassette des Schiebetritts der Fig. 1 und
- Fig. 4: eine perspektivische Ansicht des Ausschubs des Schiebetritts der Fig. 1.

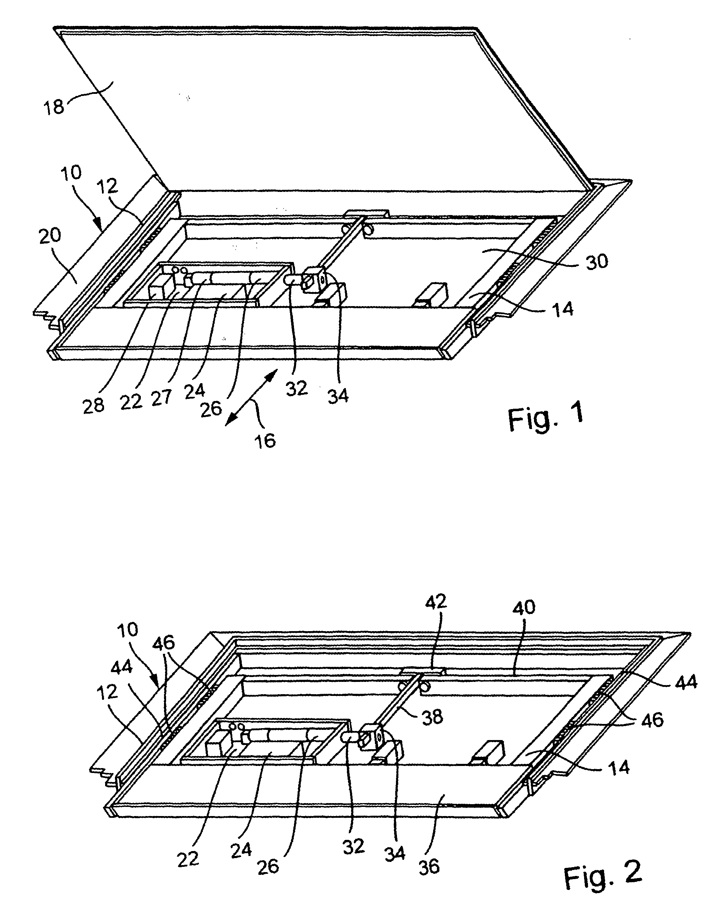

Ein in der Fig. 1 perspektivisch dargestellter Schiebetritt 10 weist eine Trittkassette 12 sowie einen, in der Trittkassette 12 verschiebbar gelagerten Ausschub 14 auf. Der Ausschub 14 kann in den durch einen Doppelpfeil 16 angedeuteten Richtungen relativ zu der Trittkassette 12 verschoben werden. In der Darstellung der Fig. 1 ist der Ausschub 14 in seiner im wesentlichen vollständig in die Trittkassette 12 eingefahrenen Stellung dargestellt.

Die Trittkassette 12 ist mit einer klappbaren Deckplatte 18 versehen, die sich im wesentlichen über die gesamte Oberseite der Trittkassette 12 erstreckt. Die Deckplatte 18 bildet einen Fußbodenabschnitt eines Schienenfahrzeugs, in dem der Schiebetritt 10 eingesetzt wird. Die Deckplatte 18 wird mittels nicht dargestellter Vorreiber an der Trittkassette 12 verriegelt. Durch die klappbare Deckplatte 18 ist, wie in der Fig. 1 zu erkennen ist, der Schiebetritt 10 für Reparatur- oder Inspektionsarbeiten sehr gut zugänglich. An drei Seiten der Deckplatte 18 schließen sich Profilleisten 20 an, die fest mit der Trittkassette 12 verbunden sind und den Übergang zu einem Fußboden des Schienenfahrzeugs schaffen. Die Profilleisten 20 sind auswechselbar an der Trittkassette 12 befestigt, so dass sie bei feststellbarem Verschleiß verursacht durch Trittbelastung von Fahrgästen ausgetauscht werden können. Die Deckplatte 18 selbst kann beispielsweise mit einem Fußbodenbelag beklebt sein, der bei Verschleiß ebenfalls austauschbar ist.

Innerhalb der Trittkassette 12 ist ein Trockenraum 22 vorgesehen, der eine Steuerelektronik 24, einen Antriebsmotor 26 mit einer elektrisch aktivierbaren Bremse 27 sowie einen Anschlussklemmenblock 28 enthält. Der Trockenraum 22 ist mit einem Deckel versehen, der in der Darstellung der Fig. 1 abgenommen und nicht dargestellt ist. Es ist aber auch möglich, den Trockenraum 22 gleichzeitig mit dem Schließen der Deckplatte 18 dichtend zu verschließen. Der Trockenraum 22 ist auf einer Grundplatte 30 der Trittkassette 12 aufgebaut und gegenüber dieser somit unbeweglich. Ausgehend von dem Antriebsmotor 26 erstreckt sich eine Antriebswelle 32 zu einer Zahnstangenschubeinheit 34. Mittels der Zahnstangenschubeinheit 34 wird der Ausschub 14 relativ zu der Trittkassette 12 verschoben.

Die Darstellung der Fig. 2 zeigt den Schiebetritt 10 bei abgenommener Deckplatte 18. Bei abgenommener Deckplatte 18 ist der gesamte Innenraum der Trittkassette 12 für Inspektions- oder Reparaturarbeiten zugänglich. Der Ausschub 14 ist in seinem, in Ausschubrichtung gesehen vorderen Bereich mit einer Trittstufe 36 versehen, die vollflächig mit einer Schaltmatte belegt ist. Wird die Trittstufe 36 somit im ausgefahrenen Zustand durch einsteigende Fahrgäste belastet, wird jede Trittbelastung durch diese Schaltmatte erfasst und an die Steuereinheit 24 im Trockenraum 22 weitergeleitet. Wird mittels der Schaltmatte eine Trittbelastung der Trittstufe 36 erkannt, wird beispielsweise eine Ausschubbewegung des Ausschubs sofort gestoppt.

Der Antriebsmotor 26 im Trockenraum 22 ist als permanenterregter 24-Volt-Gleichstrommotor mit einem nachgeschalteten zweistufigen Planetengetriebe und der angeflanschten Arbeitsstrombremse 27 ausgeführt. Durch die elektrische aktivierbare Arbeitsstrombremse kann der Antriebsmotor 26 in jeder beliebigen Stellung abgebremst und gestoppt werden. Die Zahnstangenschubeinheit 34 wird über die Abtriebswelle 32 angetrieben und eine Zahnstange 38 der Zahnstangenschubeinheit 34 ist durch einen Rahmen 40 des Ausschubs 14 geführt und weist auf der, der Abtriebswelle 32 gegenüberliegenden Seite des Rahmens 40 einen Mitnehmer 42 auf. Der Mitnehmer 42 ist über ein in der Fig. 2 nicht dargestelltes Federpaket gegen den Rahmen 40 abgestützt. Dieses Federpaket wird bei einer Bewegung der Zahnstange 38 ausgelenkt. Sowohl beim Ausfahren als auch Einziehen des Ausschubs 14 wird dieses Federpaket somit komprimiert bzw. gedehnt. Ein im Bereich des Federpakets angeordneter Kontaktschalter detektiert dabei eine Kompression oder Dehnung des Federpakets, die einen vorgegebenen Schwellwert überschreitet. Wird das Federpaket um mehr als den vorgegebenen Schwellwert komprimiert oder gedehnt, wird diese detektierte Informati-, on der Steuereinheit 24 zur Verfügung gestellt, die daraufhin für eine vorbestimmte Wegstrecke die Bewegungsrichtung des Ausschubs 14 durch geeignete Ansteuerung des Antriebsmotors 26 umkehrt.

Der Ausschub 14 ist an zwei gegenüberliegenden Seitenwandungen der Trittkassette 12 in Führungsprofilschienen 44 geführt. Die Führungsprofilschienen sind als Los-Festlager-Kombination ausgeführt, so dass ein eventueller Höhenversatz und Winkelfehler aufgenommen werden. In den Führungsprofilschienen 44 sind jeweils zwei Läufer 46 angeordnet, die wiederum mit dem Ausschub 14 fest verbunden sind. Die Laufflächen der Führungsprofilschienen 44 werden durch an den Läufern 46 angeordnete federbelastete Abstreifer von Verschmutzungen freigehalten. Jeder Läufer 46 verfügt über insgesamt drei Laufrollen. Zwei dieser Laufrollen sind fest, eine dritte Laufrolle ist als Exzenter ausgeführt. Die Läufer werden mit den festen Rollen in Hauptlastrichtung in die Führungsprofilschienen 44 eingesetzt. Die dritte, als Exzenter ausgeführte Rolle wird gegen die Hauptlastrichtung gedreht, so dass ein spielfreier Lauf der Läufer 46 in den Führungsprofilschienen 44 sichergestellt ist.

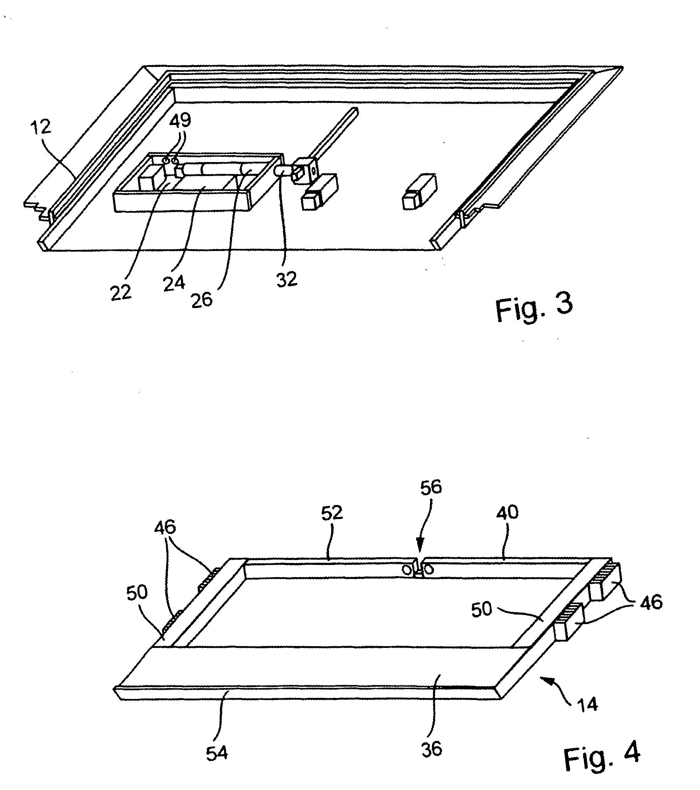

In der Darstellung der Fig. 3 ist die Trittkassette 12 bei herausgenommenem Ausschub 14 und ohne die Deckplatte 18 dargestellt. Gut zu erkennen ist der abgedichtete Trockenraum 22, mit der Steuereinheit 24, dem Antriebsmotor 26 und Verteilerklemmen 28. Wie ausgeführt wurde, ist der Trockenraum 22 gegen Feuchtigkeit und Verschmutzung abgedichtet und in den Trockenraum 22 einzuführende Anschlussleitungen werden über dichte Verschraubungen eingeführt. In einer Rückwand des Trockenraums 22 befinden sich zur Gasentlüftung zwei Durchgangsöffnungen 49 mit Verschraubungen, in die jeweils eine Membran eingelegt ist. Wesentlich ist, dass die Membran zum Verschließen der Durchgangsöffnungen 49 wasserundurchlässig aber wasserdampfdurchlässig ist, so dass durch Kondensierung im Trockenraum 22 entstandene Feuchtigkeit aus diesem austreten kann. Darüber hinaus dienen die Entlüftungsöffnungen allgemein zur Gasentlüftung, wobei aber sichergestellt ist, dass weder Verschmutzungen noch Wasser in den Trockenraum 22 eindringen kann. Zu diesem Zweck ist auch die Abtriebswelle 32 im Bereich ihrer Durchführung durch eine Wandung des Trockenraums 22 abgedichtet. Wie ebenfalls bereits ausgeführt wurde, kann der Trockenraum 22 mittels eines in der Fig. 3 nicht dargestellten, separaten Deckels oder durch die Deckplatte 18 dichtend abgeschlossen werden.

Die Deckplatte 18 selbst ist als Sandwichkonstruktion ausgeführt, so dass eine stabile und dennoch leichte Abdeckung entsteht. Die Deckplatte 18 kann mit dem Bodenbelag des jeweiligen Fahrzeugs beklebt werden.

In der Darstellung der Fig. 4 ist der Ausschub 14 dargestellt, der den aus einer Schweißkonstruktion gebildeten, rechteckigen Rahmen 40 aufweist. Der Rahmen 40 besteht aus zwei Seitenholmen 50, an deren außenliegenden Seitenflächen die Läufer 46 angeordnet sind. Die Seiten*holme 50 werden über eine hintere Querkonsole 52 sowie über wenigstens eine vordere Querkonsole miteinander verbunden, wobei die vordere Querkonsole in der Darstellung der Fig. 4 durch die Trittstufe 36 abgedeckt und nicht zu erkennen ist. Zur Abdeckung der Vorderkante des Rahmens 40 ist anschließend an die Trittstufe 36 ein robustes Kunststoffprofil 54 vorgesehen. Die in Ausschubrichtung gesehen hintere Querkonsole 52 weist eine zentrale Ausnehmung 56 zur Durchführung der Zahnstange 38 auf. Die Trittstufe 36 ist beheizbar und zu diesem Zweck mit einer Heizpatrone in einem Rohrmantel und einem Thermostat versehen, wobei die Heizpatronen und der Thermostat nicht dargestellt sind. Durch Vorsehen eines Thermostaten wird gewährleistet, dass die Heizung nur im Bedarfsfall eingeschaltet wird. Die für die Heizung erforderliche Spannungsversorgung wird vom Fahrzeug zur Verfügung gestellt. Die Funktionen des Schiebetritts, beispielsweise Ausfahren sowie damit gekoppelte Sicherheitsfunktionen, stehen nicht in direkter Abhängigkeit zur Betriebsbereitschaft der Heizung, so dass ein Ausfall der Heizung nicht zu einem Ausfall des Schiebetritts insgesamt führen kann.

Insgesamt ist aus den Fig. 1 bis 4 der kompakte Aufbau des Schiebetritts 10 zu erkennen. Indem der Ausschub 14 den rechteckigen Rahmen 40 aufweist, der durch die beiden Seitenholme 50, die Querkonsole 52 sowie die im Bereich der Trittstufe 36 angeordnete vordere Querkonsole eine zentrale Ausnehmung definiert, kann ein Antrieb für den Ausschub 14 innerhalb dieser Ausnehmung angeordnet werden. Bei der gezeigten Ausführungsform ist der Trockenraum 22 in jeder Lage des Ausschubs 14 stets zwischen den beiden Seitenholmen 50 und den beiden Querkonsolen 52 des Rahmens 40 angeordnet. Auch die Zahnstange 38 liegt im wesentlichen innerhalb des Rahmens 40 und lediglich der Mitnehmer 42 liegt auf einer Außenseite des Rahmens 40 an. Auf diese Weise können sich die Seitenholme 50 im wesentlichen über die gesamte Länge der Trittkassette 12 erstrecken, so dass die Seitenholme unmittelbar an den Seitenwandungen der Trittkassette 12 geführt werden können. Die Querabmessungen des Trittkassette 12 liegen somit lediglich um den für die Läufer 46 und die Führungsprofilschienen 46 sowie die Seitenwandungen selbst benötigten Platz über den Querabmessungen des Ausschubs 14. Der Schiebetritt 10 kann dadurch als vergleichsweise flaches, auswechselbares Modul aufgebaut werden. Die Trittkassette 12 ist in einfacher Weise aus der Grundplatte 30 und den an drei Seiten angesetzten Seitenwandungen gebildet. Die Seitenwandungen bestehen aus Strangpressprofilen.

## Patentansprüche

1. Schiebetritt, insbesondere für Schienenfahrzeuge, mit einer Trittkassette (12) und einem in der Trittkassette (12) wenigstens abschnittsweise aufnehmbaren und verschiebbar gelagerten Ausschub (14) mit einer Trittfläche (36), **dadurch gekennzeichnet, dass** innerhalb der Trittkassette (12) ein allseitig abgeschlossener, gegen eindringende Feuchtigkeit und Verschmutzung abgedichteter Trockenraum (22) vorgesehen ist, in dem ein Antriebsmotor (26) und eine Steuereinheit (24) angeordnet sind.

2. Schiebetritt nach Anspruch 1, **dadurch gekennzeichnet, dass** der Trockenraum (22) wenigstens eine mittels einer wasserundurchlässigen aber wasserdampfdurchlässigen Membran verschlossene Entlüftungsöffnung aufweist.

3. Schiebetritt nach einem der vorstehenden Ansprüche, **dadurch gekennzeichnet, dass** der Trockenraum (22) Bestandteil der Trittkassette (12) ist.

4. Schiebetritt nach einem der vorstehenden Ansprüche, **dadurch gekennzeichnet, dass** der Ausschub (14) einen Rahmen (40) mit zwei Seitenholmen (50) aufweist, zwischen denen der Trockenraum (22) wenigstens in der vollständig eingefahrenen Stellung des Ausschubs (14) angeordnet ist.

5. Schiebetritt nach Anspruch 4, **dadurch gekennzeichnet, dass** der Ausschub (14) mittels der beiden Seitenholme (50) in der Trittkassette (12) geführt ist.

6. Schiebetritt nach Anspruch 4 oder 5, **dadurch gekennzeichnet, dass** der Ausschub (14) mit einer Antriebsstange (38) gekoppelt ist, die in der vollständig eingefahrenen Endstellung des Ausschubs (14) wenigstens abschnittsweise zwischen den Seitenholmen (50) angeordnet ist.

7. Schiebetritt nach einem der vorstehenden Ansprüche, **dadurch gekennzeichnet, dass** eine Antriebsstange (38) vorgesehen ist, die mit dem Ausschub (14) oder der Trittkassette (12) mittels eines elastischen Elements gekoppelt ist, und dass Mittel vorgesehen sind, um eine Auslenkung des elastischen Elements über einen vordefinierten Schwellwert hinaus zu detektieren.

8. Schiebetritt nach einem der vorstehenden Ansprüche, **dadurch gekennzeichnet, dass** der Ausschub (14) im Bereich der Trittfläche (36) mit einer Schaltmatte belegt ist.

9. Schiebetritt nach einem der vorstehenden Ansprüche, **dadurch gekennzeichnet, dass** die Trittkassette (12) eine sich im wesentlichen über ihre gesamte Oberseite erstreckende klappbare Deckplatte (18) aufweist.

10. Schiebetritt nach Anspruch 9, **dadurch gekennzeichnet, dass** die Deckplatte (18) einen Fahrzeugfußboden im Türbereich bildet.

11. Schiebetritt nach einem der vorstehenden Ansprüche, **dadurch gekennzeichnet, dass** die Trittkassette (12) mit dem darin verschiebbar aufgenommenen Ausschub (14) sowie dem Antriebsmotor (26) und der Steuereinheit (24) ein austauschbares Modul bilden, das im Türbereich eines Schienenfahrzeugs in dessen Fußboden einsetzbar ist.

12. Schiebetritt nach einem der vorstehenden Ansprüche, **dadurch gekennzeichnet, dass** die Trittkassette (12) eine Grundplatte (30) und wenigstens zwei gegenüberliegende Seitenwandungen aufweist, wobei der Ausschub (14) verschiebbar an den Seitenwandungen gelagert ist.

13. Schiebetritt nach einem der vorstehenden Ansprüche, **dadurch gekennzeichnet, dass** die Trittfläche (36) beheizbar ist.

14. Schiebetritt nach einem der vorstehenden Ansprüche, **dadurch gekennzeichnet, dass** als Antriebsmotor (26) ein elektrischer Gleichstrommotor mit nachgeschaltetem Planetengetriebe vorge-sehen ist, der eine Zahnstangenschubeinheit (34) antreibt.

15. Schiebetritt nach einem der vorstehenden Ansprüche, **dadurch gekennzeichnet, dass** der Antriebsmotor (26) mit einer elektrisch aktivierbaren Bremse versehen ist.

## Claims

1. Sliding step, especially for rail vehicles, with a step box (12) and a movably mounted extension (14) that can be accommodated at least in sections in the step box (12), said extension having a step surface (36), **characterized in that** a dry compartment (22) is provided in the step box (12), which is closed on all sides and sealed against penetrating moisture and dirt, and a drive motor (26) and control unit (24) are disposed within the dry compartment.

2. Sliding step according to claim 1, **characterized in that** the dry compartment (22) has at least one vent that is sealed with a water-impermeable but moisture-permeable membrane.

3. Sliding step according to one of the prior claims, **characterized in that** the dry compartment (22) is a part of the step box (12).

4. Sliding step according to one of the prior claims, **characterized in that** the extension (14) has a frame (40) with two side bars (50) between which the dry compartment (22) is disposed at least when the extension (14) is completely inserted.

5. Sliding step according to claim 4, **characterized in that** the extension (14) is guided by the two side bars (50) in the step box (12).

6. Sliding step according to claim 4 or 5, **characterized in that** the extension (14) is coupled to a drive rod (38), and at least a section of the drive rod is disposed between the side bars (50) when the extension (14) is completely inserted in its end position.

7. Sliding step according to one of the prior claims, **characterized in that** a drive rod (38) is provided that is coupled to the extension (14) or the step box (12) by means of an elastic element, and means are provided to detect when the elastic element extends beyond a predefined threshold.

8. Sliding step according to one of the prior claims, **characterized in that** the extension (14) is covered with a pressure-sensitive mat at the step surface (36).

9. Sliding step according to one of the prior claims, **characterized in that** the step box (12) has a foldable cover plate (18) that extends essentially over its entire top.

10. Sliding step according to claim 9, **characterized in that** the cover plate (18) forms a vehicle floor at the door area.

11. Sliding step according to one of the prior claims, **characterized in that** the step box (12) forms an exchangeable module with the extension (14) that can be moved inside the step box, as well as the drive motor (26) and the control unit (24), and the module is insertable in the floor of a door area of a rail vehicle.

12. Sliding step according to one of the prior claims, **characterized in that** the step box (12) has a base plate (30) and at least two opposing sidewalls, wherein the extension (14) is mounted so that it can move on the sidewalls.

13. Sliding step according to one of the prior claims, **characterized in that** the step surface (36) is heatable.

14. Sliding step according to one of the prior claims, **characterized in that** an electrical DC motor is the drive motor (26) with a downstream planetary gear that can drive a rack thrust unit (34).

15. Sliding step according to one of the prior claims, **characterized in that** the drive motor (26) is provided with an electrically activated brake.

## Revendications

1. Marchepied escamotable, en particulier pour véhicules ferroviaires, comprenant un caisson de marche (12) et un mécanisme de tiroir (14) pouvant être retiré du caisson de marche (12) au moins par segments et logé de façon à pouvoir coulisser dans celui-ci, pourvu d'un plan de marche (36), **caractérisé en ce qu'**il prévoit, dans le caisson de marche (12), un compartiment sec (22) clos de toutes parts et hermétiquement protégé de l'intrusion d'humidité et de saletés, où sont logés un moteur d'entraînement (26) et une unité de commande (24).

2. Marchepied escamotable selon la revendication 1, **caractérisé en ce que** le compartiment sec (22) comprend au moins un évent d'aération fermé par une membrane, qui est imperméable à l'eau mais qui laisse passer la vapeur d'eau.

3. Marchepied escamotable selon l'une des revendications précédentes, **caractérisé en ce que** le compartiment sec (22) fait partie intégrante du caisson de marche (12).

4. Marchepied escamotable selon l'une des revendications précédentes, **caractérisé en ce que** le mécanisme de tiroir (14) comporte un cadre (40) avec deux longerons latéraux (50), entre lesquels se loge le compartiment sec (22), au moins en position totalement rentrée du mécanisme de tiroir (14).

5. Marchepied escamotable selon la revendication 4, **caractérisé en ce que** le mécanisme de tiroir (14) est guidé dans le caisson de marche (12) au moyen des deux longerons latéraux (50).

6. Marchepied escamotable selon la revendication 4 ou 5, **caractérisé en ce que** le mécanisme de tiroir (14) est couplé à une tige de commande (38) qui, en position terminale totalement rentrée du mécanisme de tiroir (14), est disposée au moins par segments entre les longerons latéraux (50).

7. Marchepied escamotable selon l'une des revendications précédentes, **caractérisé en ce qu'**une tige de commande (38) est prévue, qui est couplée au mécanisme de tiroir (14) ou au caisson de marche (12) par un élément élastique, et que des moyens sont prévus pour détecter une déviation de l'élément élastique au-delà d'une valeur de seuil prédéfinie.

8. Marchepied escamotable selon l'une des revendications précédentes, **caractérisé en ce que** le mécanisme de tiroir (14) est recouvert dans la zone du plan de marche (36) d'une natte de connexion.

9. Marchepied escamotable selon l'une des revendications précédentes, **caractérisé en ce que** le caisson de marche (12) comporte une plaque supérieure rabattable (18) s'étendant essentiellement sur la totalité de sa face supérieure.

10. Marchepied escamotable selon la revendication 9, **caractérisé en ce que** la plaque supérieure (18) forme un plancher de véhicule dans la zone de la porte.

11. Marchepied escamotable selon l'une des revendications précédentes, **caractérisé en ce que** le caisson de marche (12) forme avec le mécanisme de tiroir (14) qu'il abrite de façon à coulisser, et avec le moteur d'entraînement (26) et l'unité de commande (24), un module interchangeable qui peut être mis en place dans le plancher d'un véhicule ferroviaire au niveau de sa zone de porte.

12. Marchepied escamotable selon l'une des revendications précédentes, **caractérisé en ce que** le caisson de marche (12) possède une plaque de base (30) et au moins deux parois latérales opposées, le mécanisme de tiroir (14) étant logé de façon à pouvoir glisser dans les parois latérales.

13. Marchepied escamotable selon l'une des revendications précédentes, **caractérisé en ce que** le plan de marche (36) peut être chauffé.

14. Marchepied escamotable selon l'une des revendications précédentes, **caractérisé en ce que** l'unité d'entraînement (26) est constituée d'un moteur électrique à courant continu et d'un engrenage planétaire intercalé à sa suite, et qu'elle commande une unité de poussée à crémaillère (34).

15. Marchepied escamotable selon l'une des revendications précédentes, **caractérisé en ce que** le moteur d'entraînement (26) est équipé d'un frein à commande électrique.
